# EUROPÄISCHE PATENTSCHRIFT

(11) **EP 0 356 907 B1**
(45) Veröffentlichungstag und Bekanntmachung des Hinweises auf die Patenterteilung: **27.10.1993**
(21) Anmeldenummer: 89115597.0
(22) Anmeldetag: 24.08.1989
(51) Int. Cl.: F01N 3/28, B01J 35/04, B01D 53/36

(54) **Trägerkörper für einen katalytischen Reaktor zur Abgasreinigung**
Carrier body for a catalytic reacter for cleaning exhaust gas
Corps support pour réacteur catalytique pour purification de gaz d'échappement

(30) Priorität: 01.09.1988 DE 8811086 U
(43) Veröffentlichungstag der Anmeldung: 07.03.1990
(73) Patentinhaber: Emitec Gesellschaft für Emissionstechnologie mbH, 53797 Lohmar (DE)
(72) Erfinder: Bayer, Jürgen, D-7300 Esslingen 1 (DE); Grüner, Andreas, Dipl.-Ing. (FH), D-7320 Göppingen (DE); Humpolik, Bohumil, D-7140 Ludwigsburg (DE); Kuchelmeister, Reinhold, Dipl.-Ing. (FH), D-7035 Waldenbuch (DE)
(74) Vertreter: Kahlhöfer, Hermann, Dipl.-Phys.

(56) Entgegenhaltungen:
- EP-A- 0 210 103
- EP-A- 0 229 352
- EP-A- 0 292 784
- DE-A- 2 300 704
- DE-A- 2 400 443
- DE-A- 2 422 110
- DE-A- 3 107 620
- DE-U- 8 019 813
- FR-A- 2 392 709
- US-A- 3 961 907
- US-A- 4 207 661

## Beschreibung

Die Neuerung betrifft einen Trägerkörper für einen katalytischen Reaktor zur Abgasreinigung, insbesondere von Verbrennungskraftmaschinen für Kraftfahrzeuge, der mit einem unter Verwendung von mindestens einem gewellten Wellband hergestellten Wabenkörper versehen ist, der unter Zwischenfügen einer nachgiebigen Umhüllung in einer Mantelhülse gehalten ist.

Ein Trägerkörper dieser Art ist bekannt (DE-GM 87 15 289). Dort ist der Wabenkörper von einer elastisch verformbaren, hitzebeständigen, sogenannten Quellmatte umhüllt, die einmal als Isolierung des im Betrieb außerordentlich hohe Temperaturen erreichenden Wabenkörpers gegenüber dem außenliegenden Mantel, zum anderen aber auch als elastische Zwischenlage dient, die Wärmedehnungen des metallischen Wärmekörpers zuläßt, ohne daß dadurch die Befestigung in der Mantelhülse beeinflußt wird.

Die Anordnung einer solchen Quellmatte, wie sie auch bei keramischen Katalysatorkörpern vorgesehen ist, bereitet bei der Montage gewisse Schwierigkeiten. Der Aufwand für den Einsatz solcher Quellmatten und die Kosten der Quellmatten selbst sind in der Regel auch zu hoch, um einen wirtschaftlichen Einsatz solcher Lösungen bei Abgaskatalysatoren von Kraftfahrzeugen zu ermöglichen, auch wenn die dadurch erreichbare Wärmeisolation des Wabenkörpers nach außen und die Sicherung der Einbaulage als ausgezeichnet bezeichnet werden müssen.

Aus der DE-A-31 07 620 ist ein in einer metallischen elastischen Lagerung und Dämpfung liegender keramischer Wabenkörper bekannt. Die für die Lagerung von keramischen Körpern in einem metallischen Mantelrohr üblichen Maßnahmen lassen sich jedoch nicht ohne weiteres auf die Halterung von metallischen Wabenkörpern übertragen. Auch sind die Wärmeübertragungsmechanismen bei keramischen Wabenkörpern völlig anders.

Bei aus abwechselnden Lagen glatter und gewellter Bleche spiralig gewickelten Wabenkörpern, wie in der EP-A-229352 beschrieben ist es auch bekannt, die äußere Lage durch ein gewelltes Band zu bilden und dieses an einem Mantelrohr zu befestigen. Dadurch entsteht jedoch eine verhältnismäßig große Zahl von Wärmebrücken, so daß keine gute Isolierung erreicht wird.

Der Neuerung liegt daher die Aufgabe zugrunde, einen Trägerkörper der eingangs genannten Art so auszugestalten, daß mit einfachen Mitteln eine Wärmeisolation gegenüber der Mantelhülse möglich ist. Zur Lösung dieser Aufgabe wird bei einem Trägerkörper der eingangs genannten Art vorgesehen, daß als nachgiebige Umhüllung mindestens eine Wickellage eines gewellten Abstützbandes vorgesehen ist, dessen Wellungen eine deutlich größere Amplitude und eine größere Teilung als jene des inneren Metallbandes aufweisen, aus dem der Wabenkörper gebildet ist.

Diese Ausgestaltung weist den großen Vorteil auf, daß bei der Herstellung des neuen Trägerkörpers nicht von den bisher für aus Metallbändern gebildeten Wabenkörpern bekannten Herstellungsverfahren abgegangen werden muß. Dennoch werden wegen der größeren Teilung des Einhüllbandes die Berührungsstellen zwischen Wabenkörper und Mantelhülse entscheidend reduziert. Dadurch wird auch die Möglichkeit für einen Wärmetransport kleiner. Der Effekt der Wärmeisolation ist um so größer je weniger Berührungspunkte zwischen Wabe und Mantel bestehen, d.h. je größer die Teilung (T) ist. Der zwischen dem Wabenkörper und der Mantelhülse bzw. Innen- und Außenrohr verbleibende Ringraum kann als luftgefüllter Isolierraum ausgenützt werden, oder auch mit einer Keramikfüllung als Wärmeisolierung versehen sein. Da auch die Amplitude bzw. die Höhe des äußeren Abstützbandes verhältnismäßig groß ist, steht ein ausreichend großer Isolierraum zur Verfügung. Aufwendige Quellmatten werden überflüssig. Dazu kommt, daß die neue Ausgestaltung auch den Vorteil aufweist, daß das äußere Abstützband selbst elastisch wirkt und so beim Einbau stets für eine sichere Anlage an der Mantelhülse einerseits und andererseits am Wabenkörper sorgt, so daß nach dem üblicherweise erfolgenden Lötvorgang auch eine sichere Verbindung zwischen Wabenkörper und Mantelhülse erreicht wird. Die neue Ausgestaltung weist aber auch im Betrieb den Vorteil auf, daß wegen der elastischen Eigenschaften des äußeren Wellbandes Temperaturdehnungen des Wabenkörpers aufgefangen werden und die sonst kritische Mantel/Wabe-Verbindung entschärft werden kann.

Die Isolierwirkung kann durch die Merkmale des Unteranspruches 2 verbessert werden, weil dadurch die Berührungsflächen zwischen Wabenkörper und Mantel deutlich reduziert werden können. Die Merkmale der Unteransprüche 3, 4 und 5 tragen zu einer Verbesserung insofern bei, als der äußere Ringraum von der Abgasströmung unbeeinflußt bleibt. Es entsteht im Bereich des Abstützbandes ein isolierender Ringraum, der ausgezeichnete Temperaturisolierung vornehmen kann. Dieser Ringraum kann nach den Unteransprüchen 6 und 7 auch mit einer keramischen Ausschäumung ausgefüllt werden. Die Unteransprüche 8 und 9 beinhalten vorteilhafte bauliche Weiterentwicklungen, während die Merkmale der Unteransprüche 10, 11 und 12 den Vorteil aufweisen, daß beim Transport des fertig gelöteten Trägerkörpers der innere Wabenkörper durch den nach außen überstehenden Rand des Mantels gegen Beschädigung geschützt ist. Es ist auch möglich, das Abstützband selbst weiter nach außen zu verlegen, so daß die Wabenenden besser abgestützt werden können.

Die Merkmale des Anspruches 13 schließlich ergeben eine besonders gute elastische Abstützung, weil sich das Abstützband bei dieser Ausführungsform wie ein Federband verhält.

Die Neuerung ist anhand von Ausführungsbeispielen in der Zeichnung dargestellt und wird im folgenden erläutert. Es zeigen:
- Fig. 1: einen schematischen Teillängsschnitt durch einen Trägerkörper gemäß der Neuerung, der zwei hintereinander geschaltete Wabenkörper aufweist.
- Fig. 2: die Draufsicht auf den Trägerkörper der Fig. 1,
- Fig. 3: die vergrößerte Teildarstellung eines Schnittes längs der Linie III-III in Fig. 1, wobei die untere Hälfte eine Variante der Ausführung gegenüber der oberen Hälfte der Fig. 3 enthält und
- Fig. 4: einen Schnitt ähnlich Fig. 3, jedoch bei einer anderen Ausführungsform.

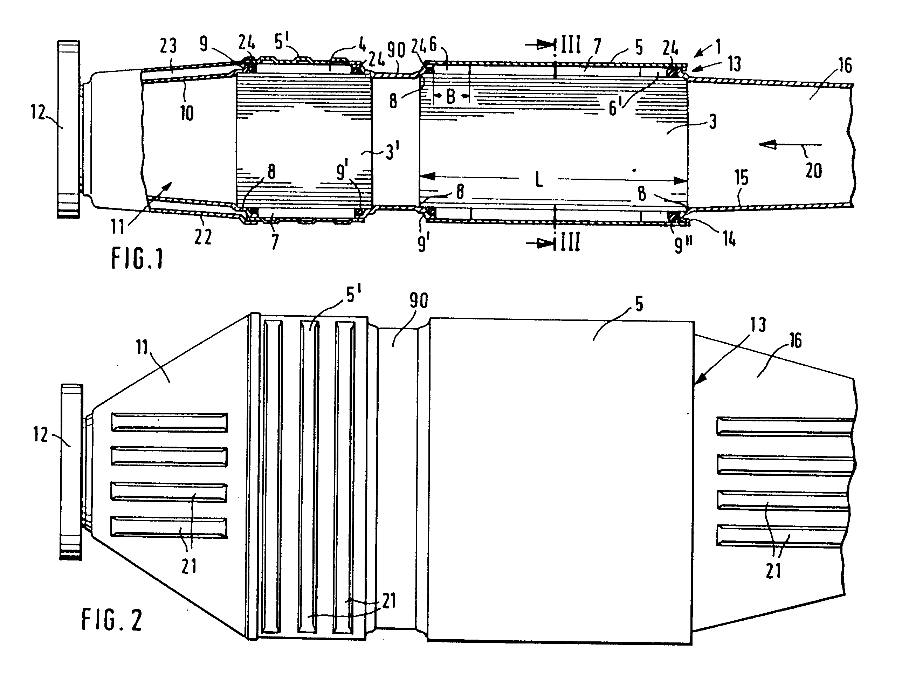

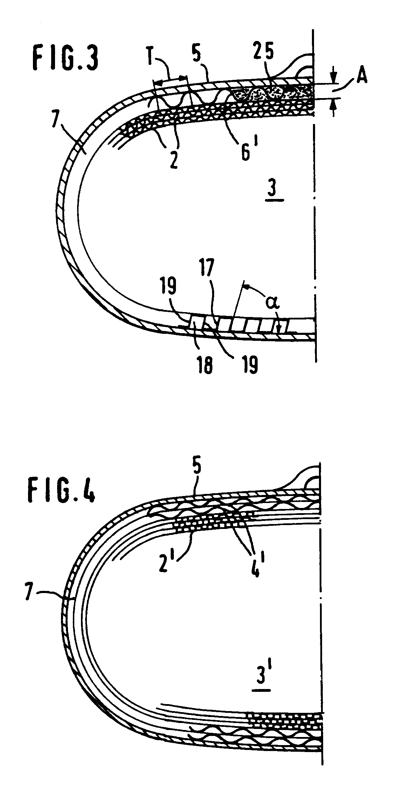

In den Fig. 1 und 2 ist ein Trägerkörper (1) für einen Abgaskatalysator gezeigt, der zur Abgasreinigung für einen Verbrennungsmotor eines Kraftfahrzeuges eingesetzt werden soll. Da im Kraftfahrzeugbau meist nur beschränkter Raum für die Verlegung von Bauteilen vorhanden ist, andererseits die vom Katalysator zur Verfügung zu stellende Reaktionsfläche ausreichend groß sein muß, besitzt der Trägerkörper (1) der Fig. 1 und 2 im wesentlichen einen ovalen Querschnitt, was insbesondere aus Fig. 3 erkennbar wird.

Der Trägerkörper (1) besteht dabei aus zwei in der Strömungsrichtung (20) hintereinander geschalteten Wabenkörpern (3) und (3'), die jeweils, wie Fig. 3 entnehmbar ist, aus einem metallischen Wellband (2) durch Wickeln mit einem Glattband und durch anschließende Verformung zur Ovalform hergestellt werden. Diese beiden Wabenkörper (3, 3'), die unterschiedliche Länge in Strömungsrichtung aufweisen, sind jeweils in einer Mantelhülse (5) bzw. (5') eingesetzt, die wiederum über Anschlußstutzen (16) bzw. (11) mit Hilfe von einem Flansch (12) und einem weiteren nicht gezeigten Flansch in die Abgasleitung einfügbar sind. Zwischen den Mantelhülsen (5) und (5') ist ein relativ kurzer Ring (90) vorgesehen, der jeweils mit Ringrändern (9) an den Mantelhülsen (5) und (5') und an den stirnseitigen Außenkanten (8) der Wabenkörper (3) und (3') anliegt. Gleiches gilt für den Ringrand (9) eines an den Flansch (12) anschließenden Rohres (10), das das innere Rohr eines doppelwandigen Anschlußstutzens (11) ist, der mit dem Flansch (12) versehen ist. Zwischen den jeweiligen Ringrändern (9 bzw. 9') des Rohres (10) bzw. des Ringes (90) und den stirnseitigen Außenkanten (8) des Wabenkörpers (3') besteht eine innige und dichte Verbindung.

Dies gilt auch für den Ringrand (9') des Zwischenringes (90) und den Ringrand (9'') eines Anschlußrohres (15), das zum Anschlußstutzen (16) gehört. Der dem Wabenkörper (3) zugewandte Rand des Rohres (15) ist dabei zu einem Ringwulst (13) umgebördelt, und zwar so, daß die Außenkante (14) des Ringwulstes (13) in die gleiche Richtung weist wie das Rohrteil (15).

Im Bereich des Ringwulstes (13) ist, wie auch bei den Ringrändern (9') des Ringes (90) und des Rohres (10) eine Dichtfläche vorgesehen, an der die stirnseitige Außenkante (8) des Wabenkörpers (3, 3') dicht anliegt. Die Abdichtung zwischen Wabenkörper (3, 3') und Mantelhülse (5, 5') kann auch durch das Einlegen von Abdichtringen (24) erreicht werden. Die Ringräume (7) innerhalb der Mantelhülse (5') bzw. (5) sind daher von der Durchströmung mit Abgas abgeschlossen. Sie dienen als luftgefüllte Isolierräume gegen Wärmeübertragung.

Da die Abstützung des Wabenkörpers (3) bzw. (3') ausschließlich an den stirnseitigen Außenkanten (8) nicht ausreicht, ist zur Abstützung des Wabenkörpers (3) innerhalb der Mantelhülse (5) vorgesehen, daß ein oder mehrere (z.B. eines in der Mitte!) in axialem Abstand zueinander angeordnete Wellbänder (6) bzw. (6') um den Wabenkörper (3) herum verlaufen, deren Form der Fig. 3 entnommen werden kann. Die Wellbänder (6) und (6') besitzen eine wesentlich größere Höhe und Amplitude (A) und eine größere Teilung (T) als die Wellungen des inneren Wellbandes (2) und sie stützen sich daher nur an wenigen Umfangsstellen - verglichen mit den Abstützstellen des Wellbandes (2) - am Wabenkörper (3) einerseits und andererseits an der Mantelhülse (5) ab. Diese Abstützbänder (6) und (6') besitzen außerdem eine wesentlich geringere Breite (B) als es der Länge (L) des Wabenkörpers (3) entspricht. Die Breite (B) muß dabei so bemessen werden, daß die von den Abstützbändern (6) und (6') aufnehmbaren Abstützkräfte ausreichen, um den Wabenkörper (3) bei allen Betriebszuständen sicher und fest im Mantel (5) zu halten.

Aus den Fig. 1 und 3 ergibt sich, daß ein verhältnismäßig großer Ringraum (7) verbleibt, der gegenüber dem Gasstrom abgedichtet ist und daher als ein Luftring eine ausgezeichnete Wärmeisolationswirkung ausüben kann. Die im Ringraum (7) liegenden Abstützbänder (6) und (6') übernehmen gleichzeitig aber auch eine gewisse elastische Lagerung für den Wabenkörper (3), da sie aufgrund ihrer geringen Dichte der zwischen den Wellungen gebildeten Zellen elastisch wirken. Sie können daher auch während des Betriebes auftretende Wärmedehnungen des Wabenkörpers (3) aufnehmen, ohne daß eine Beeinträchtigung der Befestigungsstellen zwischen Mantelhülse (5) und Wellbändern (6, 6') einerseits und zwischen den Wellbändern (6, 6') und dem Wabenkörper (3) andererseits befürchtet werden muß. Bekanntlich findet eine Verlötung des Wabenkörpers (3), natürlich auch des Wabenkörpers (3'), innerhalb der zugehörigen Mantelhülse statt, die ohne das elastisch wirkende Abstützband (6, 6') durch Wärmedehnungen beschädigt werden könnte.

Der Wabenkörper (3') ist in ähnlicher Weise innerhalb seiner Mantelhülse (5') befestigt, nur daß hier das dort vorgesehene Abstützband (4) über die gesamte zwischen den Enden der Ringränder (9) vorgesehene Länge durchgeht. Selbstverständlich könnte auch das Abstützband (4) durch zwei Abstützbänder oder mehr wie im Falle des Wabenkörpers (3) ersetzt werden.

Zur Versteifung sind die Mantelhülse (5'), das Rohr (10), das Außenrohr (22) und das Anschlußrohr (15) mit nach außen oder innen geprägten Sicken (21) versehen. Die Mantelhülse (5') geht in das Außenrohr (22) des Anschlußstutzens (11) über, der den Flansch (12) trägt. Zwischen dem Rohr (10) und dem Außenrohr (22) liegt ein Ringraum (23). Wie aus Fig. 1 in der rechten Hälfte gut erkennbar ist, bringt der Ringwulst (13) den Vorteil mit sich, daß das Abstützband (6') axial gegenüber dem Abstützband (6) weiter zum stirnseitigen Ende des Wabenkörpers (3) herausgesetzt werden kann.

Die radiale Abstützung wird daher in diesem Bereich verbessert. Die Außenkante (14) des Wulstes (13) fluchtet bei der gezeigten Ausführungsform mit der Außenkante der Mantelhülse (5), die auf diese Weise bis zur Stirnfläche des Wabenkörpers (3) axial vorgezogen werden kann, oder diese Stirnfläche sogar noch außen überragen kann. Dies ist, wie am linken Ende des Wabenkörpers (3) ohne weiteres festgestellt werden kann, bei dem Ringrand (9) nicht der Fall. Dieser überstehende Rand der Mantelhülse (5) kann als Schutz für den Wabenkörper (3) nach dessen Verlötung und bei dessen Transport dienen.

Der untere Teil der Fig. 3 zeigt eine Variante des Abstützbandes (6′) insofern, als hier ein Wellband (17) mit etwa rechteckig verlaufenden Wellungen (18) vorgesehen ist, deren Seitenwände (19) unter einem von 90° abweichenden Winkel (α), beim Ausführungsbeispiel nach rechts geneigt sind. Ein solches Abstützband (17) wirkt wegen der Anordnung der Seitenwände (19) als eine Art Federband. Es kann daher neben der möglichen Wärmeisolierung auch besonders gut die federnde Ausgleichswirkung übernehmen zwischen dem inneren Wabenkörper (3) und dem Mantelrohr (5). Im oberen Teil der Fig. 3 ist angedeutet, daß der Ringraum (7), ebenso wie der Ringraum (23), auch mit einem Keramik-Isoliermaterial (25) ausgefüllt, insbesondere ausgeschäumt sein kann.

Fig. 4 zeigt, daß nicht nur eine Wicklung eines Abstützbandes (6, 6′) zwischen Mantelhülse (5) und Wabenkörper (3) vorgesehen sein kann, sondern auch mehrere, beim Ausführungsbeispiel zwei Wicklungen eines Wellbandes (4′) vorgesehen sein können, die zusammen mit einem Glattband die äußere Umhüllung bilden. Auch solche Wellbänder (4′) können in dem Ringraum (7) die gleiche Abstütz- und Isolierwirkung übernehmen, wie nur ein Abstützband (6) oder (6′) bzw. (4) wie sie beim Ausführungsbeispiel der Fig. 1 bis 3 gezeigt sind. Der Wabenkörper (3′) selbst kann in bekannter Weise aus einem Wellband (2′) mit wesentlich kleinerer Teilung und kleinerer Zelldichte aufgebaut sein.

Zu bemerken ist noch, daß der neue Trägerkörper nach seiner Fertigstellung einem Beschichtungsprozeß ausgesetzt wird, bei dem die Oberflächen der Wabenkörper (3, 3′), aber auch jene der Wellbänder (4, 4′, 6, 6′) mit einem katalytischen Material beschichtet werden. Selbst wenn also, etwa durch Fehler bei der Herstellung, Undichtheiten an den Abdichtflächen der stirnseitigen Außenkanten (8) der Wabenkörper auftreten sollten, so werden evtl. auftretende Leckagen an den Abstützstellen in jedem Falle gereinigt, weil das Abstützband ebenfalls beschichtet ist. Dies ist bei der Anordnung anderer Umhüllungen, beispielsweise von Quellmatten, nicht der Fall.

## Patentansprüche

1. Trägerkörper für einen katalytischen Reaktor zur Abgasreinigung, insbesondere von Verbrennungskraftmaschinen von Kraftfahrzeugen, mit einem unter Verwendung von mindestens einem gewellten Metallband (2, 2') hergestellten Wabenkörper (3, 3'), der unter Zwischenfügen einer nachgiebigen Umhüllung in einer Mantelhülse (5, 5') gehalten ist, dadurch gekennzeichnet, daß als nachgiebige Umhüllung mindestens eine Wickellage eines gewellten Abstützbandes (4, 6, 6', 17) vorgesehen ist, dessen Wellungen eine deutlich größere Amplitude (A) und eine größere Teilung (T) als jene des inneren Metallbandes (2) aufweisen, aber etwa in der gleichen Richtung wie jene verlaufen.

2. Trägerkörper nach Anspruch 1, dadurch gekennzeichnet, daß die Breite (B) des Abstützbandes (6, 6') nur einem Teil der Länge (L) des Wabenkörpers (3) entspricht und daß ein Abstützband oder mehrere in axialem Abstand zueinander angeordnete Abstützbänder (6, 6') zwischen Mantelhülse (5) und Wabenkörper (3) vorgesehen sind.

3. Trägerkörper nach den Ansprüchen 1 oder 2, dadurch gekennzeichnet, daß der Ringraum (7) zwischen Mantelhülse (5, 5') und Wabenkörper (3, 3'), in dem das Abstützband (4,6,6',17) oder mehrere davon angeordnet ist bzw. sind, gegenüber dem Abgasstrom abgedichtet ist.

4. Trägerkörper nach Anspruch 3, dadurch gekennzeichnet, daß die Abdichtung durch die stirnseitigen Außenkanten (8) des Wabenkörpers (3, 3') erfolgt, die an einem Ringrand (9,9',9'') anliegen, der sich bis zur Mantelhülse (5, 5') erstreckt.

5. Trägerkörper nach Anspruch 3, dadurch gekennzeichnet, daß die Abdichtung durch hitzebeständige Abdichtringe (24) erfolgt, die zwischen Wabenkörper (3, 3') und Mantelhülse (5, 5') eingesetzt sind.

6. Trägerkörper nach Anspruch 3, dadurch gekennzeichnet, daß der Ringraum (7) mit einem Keramik-Isoliermaterial (25) ausgefüllt ist.

7. Trägerkörper nach Anspruch 6, dadurch gekennzeichnet, daß als Keramik-Isoliermaterial ein schäumbares Keramikmaterial vorgesehen ist, mit dem der Ringraum (7) ausgeschäumt ist.

8. Trägerkörper nach Anspruch 4, dadurch gekennzeichnet, daß der Ringrand (9 ) Teil eines dem Trägerkörper (1) vorgeschalteten Anschlußrohres (10) zum Anschluß an eine Abgasleitung ist.

9. Trägerkörper nach Anspruch 8, dadurch gekennzeichnet, daß das Rohr (10) der Innenteil eines doppelwandigen Verbindungstrichters (11) ist, der mit einem an die Abgasleitung anschließbaren Flansch (12) versehen ist, wobei der Ringraum (23) des doppelwandigen Verbindungstrichters mit Keramik-Isoliermaterial ausgefüllt sein kan

10. Trägerkörper, nach Anspruch 4, dadurch gekennzeichnet, daß der Ringrand (9',9'') mit einer sich von der dichtenden stirnseitigen Außenkante (8) des Wabenkörpers (3) aus radial und axial nach außen erstreckenden Kontur versehen ist.

11. Trägerkörper nach Anspruch 10, dadurch gekennzeichnet, daß der Ringrand (9'') als umgebördelter Ringwulst (13) ausgebildet ist, dessen äußere Kante (14) in die gleiche Richtung wie der innere Ringteil (15) weist.

12. Trägerkörper nach Anspruch 11, dadurch gekennzeichnet, daß der innere Ringteil (15) Teil eines Anschlußstutzens (16) für die Abgasleitung ist.

13. Trägerkörper nach Anspruch 1, dadurch gekennzeichnet, daß als Abstützband (17) ein Wellband mit etwa rechteckigen Wellungen (18) vorgesehen ist, deren Seitenwände (19) unter einem von 90° abweichenden Winkel (α) nach einer gemeinsamen Seite hin geneigt sind.

## Claims

1. A carrier body for a catalytic reactor for exhaust gas purification, in particular of internal combustion engines of motor vehicles, comprising a honeycomb body (3, 3') which is produced using at least one corrugated metal strip (2, 2') and which is held in a casing (5, 5') with the interposition of a flexible sheathing, characterised in that provided as the flexible sheathing is at least one winding layer of a corrugated support strip (4, 6, 6', 17), the corrugations of which are of a clearly greater amplitude (A) and a greater pitch (T) than those of the inner metal strip (2), but extend approximately in the same direction as same.

2. A carrier body according to claim 1 characterised in that the width (B) of the support strip (6, 6') only corresponds to a part of the length (L) of the honeycomb body (3) and that a support strip or a plurality of support strips (6, 6') which are arranged at an axial spacing relative to each other are provided between the casing (5) and the honeycomb body (3).

3. A carrier body according to claim 1 or claim 2 characterised in that the annular space (7) between the casing (5, 5') and the honeycomb body (3, 3'), in which the support strip (4, 6, 6', 17) or a plurality thereof is or are arranged, is sealed off relative to the exhaust gas flow.

4. A carrier body according to claim 3 characterised in that the sealing effect is produced by the end outside edges (8) of the honeycomb body (3, 3'), which bear against an annular rim (9, 9', 9'') which extends as far as the casing (5, 5').

5. A carrier body according to claim 3 characterised in that the sealing effect is produced by heat-resistant sealing rings (24) which are inserted between the honeycomb body (3, 3') and the casing (5, 5').

6. A carrier body according to claim 3 characterised in that the annular space (7) is filled with a ceramic insulating material (25).

7. A carrier body according to claim 6 characterised in that the ceramic insulating material is a foamable ceramic material with which the annular space (7) is filled by foaming.

8. A carrier body according to claim 4 characterised in that the annular rim (9) is part of a connecting pipe (10), which is disposed upstream of the carrier body (1), for connection to an exhaust pipe.

9. A carrier body according to claim 8 characterised in that the pipe (10) is the inner part of a double-wall connecting funnel (11) provided with a flange (12) which can be connected to the exhaust pipe, wherein the annular space (23) of the double-wall connecting funnel can be filled with ceramic insulating material.

10. A carrier body according to claim 4 characterised in that the annular rim (9', 9'') is provided with a contour which extends radially and axially outwardly from the sealing end outside edge (8) of the honeycomb body (3).

11. A carrier body according to claim 10 characterised in that the annular rim (9'') is in the form of a flanged-over annular collar (13) whose outer edge (14) faces in the same direction as the inner annular portion (15).

12. A carrier body according to claim 11 characterised in that the inner annular portion (15) is part of a connection piece (16) for the exhaust pipe.

13. A carrier body according to claim 1 characterised in that the support strip (17) is a corrugated strip with approximately rectangular corrugations (18), the side walls (19) of which are inclined towards a common side at an angle (α) differing from 90°.

## Revendications

1. Corps support pour un réacteur catalytique d'épuration de gaz d'échappement, notamment de moteurs à combustion de véhicules automobiles, avec un corps en nid d'abeilles (3, 3') qui est réalisé en utilisant au moins une bande métallique ondulée (2, 2') et qui est maintenu dans un manchon enveloppant (5, 5') avec intercalation d'une enveloppe flexible, **caractérisé** en ce qu'il est prévu comme enveloppe flexible au moins une couche d'enroulement d'une bande de soutien ondulée (4, 6, 6', 17), dont les ondulations présentent une amplitude nettement supérieure (A) et un pas supérieur (T) à ceux des ondulations de la bande métallique intérieure (2), mais se développent approximativement dans la même direction que ces dernières.

2. Corps support selon la revendication 1, **caractérisé** en ce que la largeur (B) de la bande de soutien (6, 6') ne correspond qu'à une partie de la longueur (L) du corps en nid d'abeilles (3) et en ce qu'une bande de soutien, ou plusieurs bandes de soutien (6, 6') disposées à distance axiale les unes des autres, sont prévues entre le manchon enveloppant (5) et le corps en nid d'abeilles (3).

3. Corps support selon la revendication 1 ou 2, **caractérisé** en ce que l'espace annulaire (7) entre le manchon enveloppant (5, 5') et le corps en nid d'abeilles (3, 3'), espace dans lequel est ou sont disposées la bande de soutien ou plusieurs bandes de soutien (4, 6, 6', 17), est étanché vis-à-vis du flux de gaz d'échappement.

4. Corps support selon la revendication 3, **caractérisé** en ce que l'étanchement est réalisé par les arêtes extérieures frontales (8) du corps en nid d'abeilles (3, 3'), qui s'appliquent contre un bord annulaire (9, 9', 9'') s'étendant jusqu'au manchon enveloppant (5, 5').

5. Corps support selon la revendication 3, **caractérisé** en ce que l'étanchement est réalisé par des bagues d'étanchéité (24) résistantes à la chaleur, qui sont insérées entre le corps en nid d'abeilles (3, 3') et le manchon enveloppant (5, 5').

6. Corps support selon la revendication 3, **caractérisé** en ce que l'espace annulaire (7) est rempli d'un matériau céramique isolant (25).

7. Corps support selon la revendication 6, **caractérisé** en ce qu'il est prévu comme matériau céramique isolant un matériau céramique moussant, qui remplit par moussage l'espace annulaire (7).

8. Corps support selon la revendication 4, **caractérisé** en ce que le bord annulaire (9) fait partie d'un tube de raccordement (10), monté en amont du corps support (1) pour le raccordement à un tuyau d'échappement.

9. Corps support selon la revendication 8, **caractérisé** en ce que le tube (10) fait partie d'un cône de jonction (11) à double paroi, muni d'un flasque (12) pouvant être raccordé au tuyau d'échappement, l'espace annulaire (23) du cône de jonction à double paroi pouvant être rempli de matériau céramique isolant.

10. Corps support selon la revendication 4, **caractérisé** en ce que le bord annulaire (9', 9'') est doté d'un contour s'étendant radialement et axialement vers l'extérieur à partir des arêtes extérieures frontales d'étanchement (8) du corps en nid d'abeilles (3).

11. Corps support selon la revendication 10, **caractérisé** en ce que le bord annulaire (9'') est réalisé sous la forme d'un bourrelet annulaire rabattu (13), dont l'arête extérieure (14) est dirigée dans la même direction que la partie annulaire intérieure (15).

12. Corps support selon la revendication 11, **caractérisé** en ce que la partie annulaire intérieure (15) fait partie d'une tubulure de raccordement (16) pour le tuyau d'échappement.

13. Corps support selon la revendication 1, **caractérisé** en ce qu'il est prévu comme bande de soutien (17) une bande ondulée à ondulations approximativement rectangulaires (18), dont les parois latérales (19) sont inclinées vers un côté commun sous un angle (α) différent de 90°.
